# EUROPÄISCHE PATENTSCHRIFT

(11) **EP 1 314 643 B1**
(45) Veröffentlichungstag und Bekanntmachung des Hinweises auf die Patenterteilung: **01.03.2006**
(21) Anmeldenummer: 02022656.9
(22) Anmeldetag: 10.10.2002
(51) Int. Cl.: B64D 11/00, B64D 11/06

(54) **Anordnung von Passagiersitzreihen in Verkehrsmitteln, insbesondere in Kabinen von Passagierflugzeugen**
Arrangement of passenger seats in transport vehicles, in particular in aircraft cabins
Disposition des sièges de passagers dans des véhicules de transport, en particulier dans les cabines d'aéronef

(30) Priorität: 27.11.2001 DE 10158141
(43) Veröffentlichungstag der Anmeldung: 28.05.2003
(73) Patentinhaber: Airbus Deutschland GmbH, 21129 Hamburg (DE)
(72) Erfinder: Sprenger, Wilfried, 21698 Issendorf (DE)
(74) Vertreter: Hansmann, Dierk

(56) Entgegenhaltungen:
- EP-A- 0 126 056
- WO-A-82/00618
- DE-A- 3 529 957
- FR-A- 2 495 552
- GB-A- 590 030

## Beschreibung

Die Erfindung betrifft eine Anordnung von Passagiersitzreihen in Verkehrsmitteln, insbesondere in Kabinen von Passagierflugzeugen, wobei mehrere Sitzreihen hintereinander angeordnet sind, die Sitzreihen mit den äußeren Sitzen im nicht zugänglichen Kabinenfensterbereich vorgesehen sind und der Zugang zu den Sitzreihen von einer Gangseite erfolgt.

Gegenstand der Erfindung ist eine neuartige Anordnung von Passagiersitzen für Passagierflugzeuge und andere Verkehrsmittel. Spezielle Anordnungen von Sitzplätzen kommen beispielsweise vor im Theater, bei Eisenbahnen und Aussichtsbussen etc. In Flugzeugen hingegen ist es seit Jahrzehnten üblich - insbesondere in der engen sogenannten Tourist Class/TC (auch Economy Class/EC bezeichnet) - die Passagiersitze in rechtwinklig zu den Gängen stehenden Sitzreihen anzuordnen. Eine derartige Anordnung von Passagiersitzen ist beispielsweise aus dem in DE-OS 41 16 524 ersichtlichen Kabinenlayout bekannt. Die wirtschaftliche Absicht dieses Grundrisses mit Rechteckmuster ist die maximale Ausnutzung der zur Verfügung stehenden Kabinenfläche und die Normierung der Sitztypen. Außerdem müssen im Luftverkehr Vorschriften bezüglich Unfallschutz berücksichtigt werden. Dazu gehört unter anderem, dass die Passagiersitze in Verkehrsflugzeugen zumeist nach vorne orientiert sind, oder dass während Start und Landung die Sitze von den Flugbegleitern einsehbar sein müssen. Weiterhin sind für die Breite der Mittelgänge und Durchgänge zu den Notausgängen bestimmte Maße einzuhalten, um zu gewährleisten, dass das vollbesetzte Flugzeug in wenigen Minuten evakuiert werden kann. Dazu darf auch der Abstand der Sitzreihen zueinander, d.h. das Maß zwischen Sitzkante und Rückenlehne Vordersitz, eine definierte Größe nicht unterschreiten.

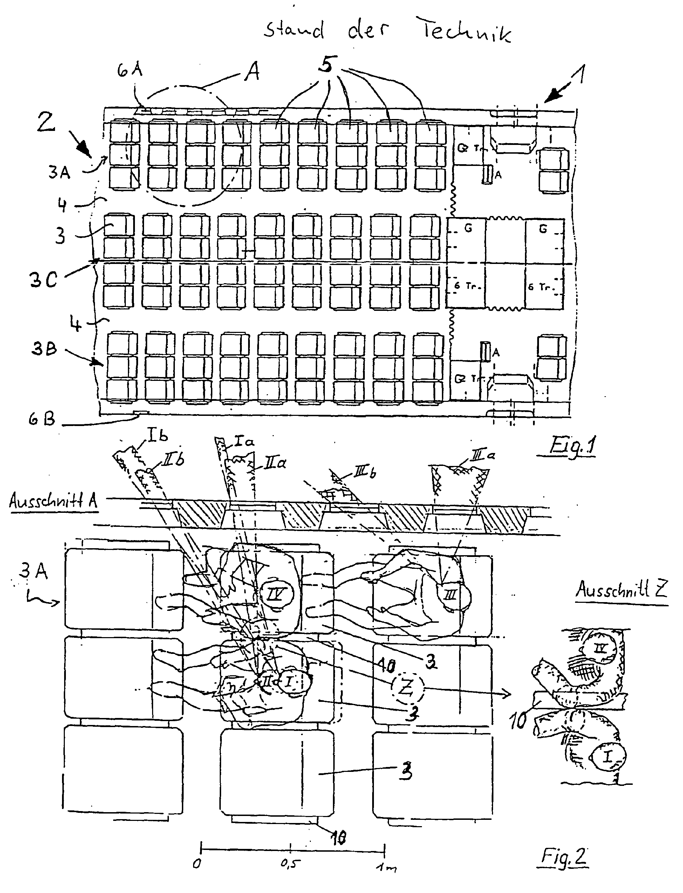

Ein solcher rechtwinkliger Grundriß ist ebenfalls in den Fign. 1 und 2 der Zeichnung dargestellt. Wie hinlänglich bekannt, ist diese Tourist-Class-Bestuhlung für den Passagier vor allem auf Langstreckenflügen strapaziös und verursacht Unbehagen, wenn meist alle Sitzreihen voll besetzt sind und insbesondere der Mittelsitz auch belegt ist. Ein wesentlicher Faktor für ein unkomfortables Sitzen entsteht daraus, dass die nebeneinander liegenden Sitze keine ausreichende Ellbogenfreiheit gewährleisten. So sind zwei nebeneinander sitzende Personen jedes Mal gezwungen sich zu einigen, wer den Ellbogen vorne, hinten oder (meistens) überhaupt nicht auf die Armstütze aufliegen lassen kann. Zudem kommt, dass die an der Gangseite der Sitzgruppe sitzenden Passagiere kaum Sicht durch die sowieso schon kleinen Kabinenfenster haben. In vergrößerter Darstellung ist in Fig. 2 der Ist-Zustand im Bereich der Armlehnen mit der Situation der Ellbogen sowie der Sichtbehinderung durch benachbarte Sitze oder Personen. Bei Personen ähnlicher Größe befinden sich die Ellbogen auf gleicher Höhe, so dass einer der Passagiere ohne Ellbogenstütze auskommen muss. Die Abbildung zeigt beispielhaft eine 3er-Bestuhlung, jedoch kommen genauso Anordnungen mit 2 oder mehr als 3 Sitzen nebeneinander in Betracht. Die 3er-Bestuhlung an der Kabinenaußenseite findet aber bei vielen Flugzeugen Verwendung. Die Dringlichkeit der Verbesserung von Sitzanordnungen wird durch aktuelle Umfragen bei Flugpassagieren und auch Medizinern unterstrichen, wobei sich ergibt, dass der Komfortbedarf ständig wächst, Gefahren für die Gesundheit durch zu enge Bestuhlung bestehen und dies bei einer prognostizierten Zunahme der Körpergröße.

In WO-A-8200618, welche als nächstliegender Stand der Technik angesehen wird, wird eine versetzte Anordnung von Sitzen innerhalb einer Sitzreihe offenbart, die eine verbesserte Nutzung der Armlehnen ermöglicht und damit den Sitzkomfort für die einzelnen Passagiere erhöht. Es ist aus einer Ausführungsform bekannt, dass die Sitzreihe eine zur Senkrechten einer Passagierkabinenlängsachse ausgerichtete Schräganordnung bildet. Die einzelnen Sitze sind jedoch jeweils in Flugrichtung ausgerichtet. Für die sitzenden Passagiere ist mit einer in Flugrichtung ausgerichteten Blickrichtung der Blick aus dem Fenster nicht optimal.

Aus GB-A-590030 ist eine Doppelsitzanordnung bekannt, die u.a. für Busse Anwendung finden soll. Anstelle der üblichen senkrecht zur Reiserichtung ausgerichteten Sitzreihen ist es vorgesehen, dass der gangseitige Sitz für den innen sitzenden Passagier in Reiserichtung ausgerichtet ist sowie der äußere Sitz in Richtung des Ganges gedreht wird mit einem Winkel von 15° bis 45°. Damit soll erreicht werden, dass der außen Sitzende ein besseres Platzangebot erhält. Es ist jedoch dieser Schrift nicht entnehmbar, dass eine verbesserte Sicht aus dem Fenster erreicht werden soll.

Der Erfindung liegt daher die Aufgabe zugrunde, die oben beschriebenen Einschränkungen bei einer Passagiersitzanordnung zu beheben bzw. zu verbessern, ohne dass mehr Bodenfläche pro Passagiersitz erforderlich ist. Der Komfort für einen in der Tourist Class bzw. Economy Class sitzenden Passagier soll verbessert und das Fliegen in dieser Klasse attraktiver werden.

Diese Aufgabe wird bei einer gattungsgemäßen Sitzanordnung mit den im Patentanspruch 1 genannten Maßnahmen gelöst.

Dabei ist insbesondere von Vorteil, dass sich durch die erfindungsgemäße Anordnung keinerlei Bodenflächenverlust pro Sitz ergibt.
Es wird ein deutlich verbesserter Passagierkomfort durch die gestaffelte Sitzanordnung erreicht, wobei:
- mehr Ellbogenfreiheit gewährleistet ist; der Ellbogen eines etwa gleich großen Nachbarn kann um das Maß "d" versetzt auf der gemeinsamen Armstütze aufliegen, so dass die gegenseitige Beeinträchtigung fast gänzlich vermieden ist.
- eine Verbesserung der Fenstersicht erreicht ist; die Sitzstaffelung ermöglicht es dem innen zum Mittelgang sitzenden Passagier, wesentlich besser an den außen sitzenden Nachbarn vorbei zum Fenster zu sehen (in der Zeichnung durch Sichtwinkel dargestellt).

Weiterbildungen und vorteilhafte Ausgestaltungen sind in den Unteransprüchen 2 bis 11 sowie auch in der nachfolgenden Figurenbeschreibung angegeben.

Um bei der erfindungsgemäßen Schräganordnung der Sitzreihen auch die geforderte Durchgangsbreite zwischen zwei hintereinander liegenden Sitzgruppen zu gewährleisten, wird vorgeschlagen, die Rückenlehnen - wie in der Draufsicht ersichtlich - abzuschrägen bzw. zu wölben. Hierdurch wird die Durchgangs-Verengung, welche sich durch die Sitzverschiebung "d" bei Sitzen mit rechteckiger Lehne ergeben würde, vermieden bzw. der Durchgang wird stellenweise sogar noch vergrößert. Die Wölbung der Rückenlehne kann bedarfsweise einseitig konzipiert sein, doch empfiehlt sich aus Kostengründen eine symmetrische Wölbung, wodurch der Sitz sowohl links als auch rechts im Flugzeug oder Fahrzeug verwendbar ist.

In einer Fortbildung des erfindungsgemäßen Konzepts können zusätzlich zur Sitzverschiebung (Maß "d" bzw. Winkel "α") die weiter innen liegenden Sitze sukzessiv leicht nach außen zum Fensterband hin gedreht werden, wodurch sich weitere Verbesserungen hinsichtlich Sicht und Durchgangsbreite ergeben. Außerdem kann es in Zusammenhang mit der vorgeschlagenen Sitzgeometrie von Vorteil sein, die einzelnen Sitze auf einem gemeinsamen Sitzträger zu montieren, der sich zum einen auf eine im Boden laufenden Schiene und zum anderen seitlich am Rumpf abstützt. Damit wird gegenüber Abstützungen, welche ausschließlich die Bodenschienen verwenden, zusätzlich Fußraum gewonnen und die Schrägmontage der Sitze erleichtert.

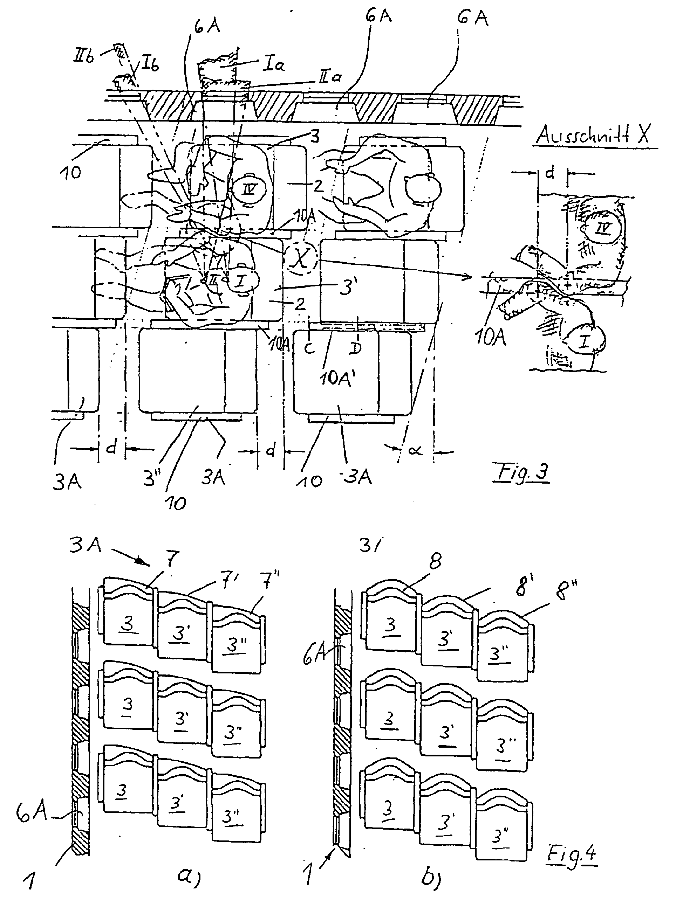

In der Zeichnung ist ein Ausführuhgsbeispiel der Erfindung dargestellt, das nachstehend anhand der Figuren 3 bis 6 beschrieben ist. Die Figuren 1 und 2 zeigen beispielhaft den bekannten Stand der Technik. In den Figuren sind gleiche Bauteile mit gleichen Bezugszeichen versehen.

Die Zeichnung zeigt im einzelnen:
- Fig. 1: eine heute übliche Sitzanordnung,
- Fig. 2: eine 3er-Bestuhlung gemäß Ausschnitt A von Fig. 1,
- Fig. 3: eine erfindungsgemäße Sitzreihen-Schräganordnung,
- Fig. 4: Varianten bei der Rückenlehnen-Gestaltung,
- Fig. 5: eine Schräganordnung mit zusätzlich gedrehten Sitzen und
- Fig. 6: eine Sitzbefestigung mittels Sitzträger.

Fig. 1 zeigt eine heute bei Passagierflugzeugen 1 übliche Sitzanordnung 2 in der Touristenklasse (TC). Die Passagiersitze 3 sind in rechtwinklig zu den Gängen 4 stehenden Sitzreihen 5 angeordnet. Die Sitzreihen 5 werden gebildet durch Sitzgruppen, wobei in dieser beispielhaft gezeigten Anordnung eine Sitzgruppe 3A mit einer 3er-Bestuhlung im Fensterbereich 6A, im mittleren Bereich zwei 2er-Sitze zu einer viersitzigen Sitzgruppe 3C und eine Sitzgruppe 3B mit einer 3er-Bestuhlung im Bereich der gegenüberliegenden Fensterseite 6B vorgesehen ist. Der Ausschnitt A im Bereich von hintereinander stehenden Sitzgruppen 3A, beispielhaft mit einer 3er-Bestuhlung, wird im folgenden in der Fig. 2 näher betrachtet.
Fig. 2 zeigt in einer vergrößerten Darstellung die äußere Bestuhlung der Sitzgruppe 3A gemäß des Ausschnitts A von Fig. 1 mit drei Passagieren. Beim Ausschnitt Z ist ersichtlich, dass lediglich der Ellbogen eines Passagiers (IV) auf der Armstütze 10 zwischen den Sitzen 3 Platz findet. Auch die Sichtverhältnisse sind für die Positionen (I) und (II) des innen sitzenden Passagiers recht ungünstig. Für die Position (I) ergeben sich lediglich die kleinen Sichtsektoren Ia und Ib. Etwas besser wird die Sicht IIa und IIb, wenn der Passagier am Mittelsitz die vorgeneigte Kopfposition II einnimmt. Im Vergleich dazu sind die Sichtverhältnisse für den Fensterplatz III aber mit den Sichtsektoren IIIa und IIIb wesentlich günstiger.
In Fig. 3 ist eine erfindungsgemäße Tourist-Class-Sitzanordnung mit einer besonderen Schräganordnung - im Gegensatz zur oben beschriebenen rechtwinkligen Anordnung - mit um eine Sitzverschiebung "d" versetzten Sitzen bzw. einen Schrägungswinkel "α" dargestellt. Die am Fenster 6A vorgesehenen hintereinander angeordneten Sitzgruppen 3A sind als Beispiel für eine Passagiersitzanordnung eines gesamten Passagierflugzeuges anzusehen. Jeder Sitz 3 einer Sitzgruppe 3A wird um einen Versatz "d" zum benachbarten Sitz seiner Sitzgruppe angeordnet, wobei der Fenstersitz 3 (im folgenden auch äußerer Sitz) in seiner ursprünglichen Lage verbleibt und der mittlere Sitz 3' um den Versatz "d" sowie der gangseitige Sitz 3" mit einen weiteren Versatz "d" angeordnet ist. In anderen Worten ist eine versetzte Anordnung von Sitzen 3, 3', 3" einer Sitzgruppe vorgesehen, deren Versatz entweder mit einer Sitzverschiebung "d" oder einem Schrägungswinkel "α" beschrieben werden kann. In einer bevorzugten Ausführung ist ein Schrägungswinkel α von ca. 15° vorgesehen. Zur genaueren Definition der Schräge ist entsprechend der Bestuhlung (welche Sitzabmessungen, welche Sitzreihenabstände) das Maß für die Sitzverschiebung (d) heranzuziehen. Bei größerer Sitzbreite (z.B. Business Class) bleibt der Winkel (α) erhalten, während das Maß "d" entsprechend vergrößert werden müsste.

Eine beabsichtigte Sichtverbesserung ergibt sich natürlich nur dann, wenn die in Gangrichtung innenliegenden Sitze 3' und 3" um jeweils den Abstand d nach vorne rücken. Bezüglich der Ellbogenfreiheit - siehe Ausschnitt X - wäre neben der Sitzverschiebung nach vorn auch eine Sitzverschiebung nach hinten gleichermaßen vorteilhaft. Die Sitzverschiebung d bedingt zwischen den Sitzen 3, 3' und 3" verlängerte Armstützen 10A, welche sich zu den normalen Armstützen 10 etwa um das Maß d unterscheiden und - wie in Ausschnitt X ersichtlich - von benachbarten Passagieren (I) und (IV) gleichzeitig genutzt werden können. Aufgrund der um das Maß d nach vorne versetzen Sitze 3' sowie 3" werden die für den Passagier (I) und (II) möglichen Sichtwinkel Ia und Ib bzw. IIa und IIb deutlich verbessert, d.h. auch der innen sitzende Passagier hat fast ungehinderte Sicht aus dem Fenster.
Der Abstand d bzw. der Winkel α ergeben sich aus der Optimierung zwischen Passagierkomfort, Sitzzugänglichkeit und Kabinenkonfiguration bei der TC-Kabine im Bereich von 100 bis 180 mm bzw. 15° ± 3°. Tests mit derartig positionierten Sitzen zeigen, dass einerseits sich nur ein Abstand d > 100 - 120 mm positiv auf eine Steigerung des Komforts auswirkt; andererseits führt eine Vergrößerung > 150-180 mm zu Zugänglichkeitsproblemen zu den Sitzen, die nicht an die Mittelgänge angrenzen. Außerdem ist zu berücksichtigen, dass mit größer werdendem Abstand d mehr Änderungen an der Kabinenkonfiguration bzw. dem Kabinenlayout (z.B. Positionierung WCs und Galleys) notwendig werden.

Zur besseren Passierbarkeit sind bei den üblichen Passagiersitzen 3 nach oben schwenkbare Armstützen 10 angebracht. Eine solche Einrichtung ist selbstverständlich auch bei der Erfindung möglich, doch sind die zwischen den Sitzen 3 und 3' sowie 3' und 3" vorhandene Armstützen 10A länger ausgebildet als die außen angebrachten Armstützen 10, wie die Fig. 3 zeigt. Da das Schwenken der längeren Armstützen 10A unter Umständen umständlich ist, wird vorgeschlagen, die Armstützen teleskopartig horizontal ausziehbar zu gestalten. Diese Lösung ist in der Zeichnung schematisch für eine Armstütze 10A' dargestellt, deren Ende C teleskopisch zur Position D verschoben werden kann. Somit wird der Durchgang zu den Sitzen 3, 3' und 3" auf einfache Art verbessert, ohne dass die langen Armstützen 10A verschwenkt werden müssen. Eine andere Möglichkeit ergibt sich, wenn nur ein Teil der Armstützen 10A, beispielsweise um die Position D nach unten oder oben verschwenkt wird.

Um bei der erfindungsgemäßen Sitzanordnung 3A den ungehinderten Durchgang zu gewährleisten, sind in Fig. 4 Varianten der Rückenlehnengestaltung dargestellt. Jeder Passagiersitz 3, 3' und 3" ist mit eine Rückenlehne 7, 7' oder 7" ausgestattet. Wie bereits erwähnt und in Fig. 3 deutlich erkennbar, wird bei einem größerem Abstand d der Durchgang zwischen den Sitzreihen immer enger. Ein Verbesserung kann dann erreicht werden, wenn die Rückenlehne 7, 7' und 7" in Gangrichtung bei Eintritt zwischen den Sitzgruppen 3A eine abgeschrägte Form aufweist. In Fig. 4A ist eine derartige Lösungsvariante dargestellt. In Gangrichtung sind vorzugsweise entsprechend des Schrägungswinkels "α"abgeschrägte Rückenlehnen 7, 7' und 7" vorgesehen, wodurch sich die Breite des Durchgangs vergrößern lässt. Um zu vermeiden, dass zwei solche Sitztypen (Abschrägungen links und rechts) für ein Flugzeug vorrätig sein müssen, bietet sich ein symmetrische Abschrägung gemäß Fig. 4B an. Dabei erhält eine Rückenlehne 8, 8' bzw. 8" in zweiter Ausführungsform eine beidseitige Abschrägung bzw. eine Wölbung mittig des Lehnenbereichs.

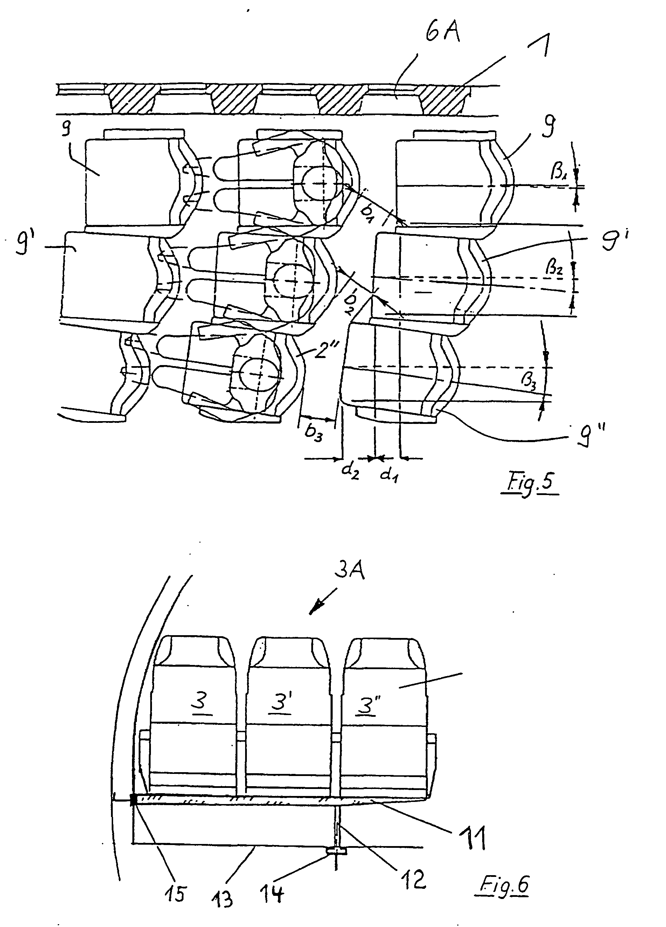

Fig. 5 zeigt eine Fortbildung der Erfindung mit zusätzlich zur Schräganordnung um den Winkel β gedrehte Sitze 9, 9', 9", wobei diese von außen, d.h. ausgehend von der Kabinenfensterseite beginnend mit zunehmendem Winkel β₁, β₂ und β₃ um die Mittelachse des jeweiligen Sitzes gedreht sind. Es ergibt sich der Vorteil einer verbesserten Sicht der innen sitzenden Passagiere und einer Vergrößerung der Durchgangsbreite b₁,b₂ und b₃. Wie aus der Fig. 5 ersichtlich, ergibt sich dann für die Sitze 9' und 9" jeweils eine unterschiedliche Sitzverschiebung d₁ oder d₂. Somit lassen sich die Sichtverhältnisse zum Kabinenfenster 6A und die Durchgangsbreiten b₁, b₂ und b₃ optimieren. Die dargestellten Winkel β₁, β₂ und β₃ liegen im Bereich von 0-8°.

In Fig. 6 ist in einer Vorderansicht die Sitzgruppe 3A innerhalb eines Verkehrsmittels, beispielsweise des Passagierflugzeuges 1 dargestellt, wobei die einzelnen Sitze 3, 3' oder 3" auf einem Sitzträger 11 individuell montierbar sind.

Denkbar ist es auch, die individuell leicht gedrehten Sitze 9, 9' und 9" gemäß Fig. 5 auf einem derartigen Sitzträger 11 zu montieren. Der Sitzträger 11 stützt sich einerseits über ein Strebenfachwerk 12 an einer im Boden 13 verlaufende Sitzschiene 14 ab, andererseits ist eine weitere Sitzträgerbefestigung 15 seitlich am Rumpf vorhanden. Neben dem Montagevorteil für die Sitze 3 bzw. 9 ergibt sich so zusätzlicher Fußraum. Zwecks Übertragung der beträchtlichen Lasten im Crash-Fall kann die seitliche Sitzträgerbefestigung 15 als Zweipunktauflage (in x-Richtung) ausgebildet sein.

### Bezugszeichenliste

- 1 -: Passagierflugzeug
- 2 -: Sitzanordnung in Rechteckform
- 3, 3', 3" -: Passagiersitze
- 3A, 3B, 3C -: Sitzgruppen
- 4 -: Gänge in Flugzeugkabine
- 5 -: Sitzreihen
- 6A, 6B -: Fensterseite im Flugzeug
- 7 -: Rückenlehne von einem Passagiersitz
- 8 -: Rückenlehne in zweiter Ausführungsform
- 9, 9', 9" -: Passagiersitz in zweiter Ausführungsform
- 10 -: Armstützen
- 10A -: verlängerte Armstütze
- 10A' -: horizontal herausziehbare Armstütze
- 11 -: Sitzträger
- 12 -: Strebenfachwerk
- 13 -: Flugzeugboden / -struktur
- 14 -: Sitzschiene
- 15 -: Sitzträgerbefestigung

## Patentansprüche

1. Anordnung von Passagiersitzreihen in Verkehrsmitteln, insbesondere in Kabinen (1) von Passagierflugzeugen, wobei mehrere Sitzreihen hintereinander angeordnet sind, die Sitzreihen mit den äußeren Sitzen im nicht zugänglichen Kabinenfensterbereich vorgesehen sind und der Zugang zu den Sitzreihen (5) von einer Gangseite (4) erfolgt, zumindest ein gangseitiger, innerer Sitz (9', 9") innerhalb einer Sitzreihe (5) vorgesehen ist und jeweils ausgehend von dem äußeren Sitz (9 bzw. 9') zu dem unmittelbar angrenzenden inneren Sitz (9' bzw. 9") eine Sitzverschiebung (d) in Flugzeuglängsrichtung bzw. die Sitzreihen (5) ausgehend von einer Senkrechten zur Flugzeuglängsachse eine Schräganordnung (mit einem Winkel α) aufweisen, **dadurch gekennzeichnet, dass** innerhalb der Sitzreihe (5) der jeweilige Sitz (9, 9', 9") eine um die Sitzdrehachse gedrehte Position (Winkel β₁, β₂, β₃) aufweist und die Drehung des einzelnen Sitzes (9, 9', 9") innerhalb eines Bereichs von 0° - 8° um die Sitzdrehachse erfolgt, wobei der erste Drehwinkel (β₁) des äußeren Sitzes (9) kleiner oder gleich dem zweiten Drehwinkel (β₂) des angrenzenden mittleren Sitzes (9') ist und der daran angrenzende gangseitige Sitz (9") einen dritten Drehwinkel (β₃) größer oder gleich dem Drehwinkel (β₂) des angrenzenden mittleren Sitzes (9') aufweist.

2. Anordnung nach Anspruch 1, **dadurch gekennzeichnet, dass** die Sitzverschiebung (d) ausgehend von einem äußeren Sitz (3; 9) zu einen unmittelbar benachbartem angrenzenden inneren Sitz (3', 9') in Flugrichtung erfolgt.

3. Anordnung nach einem der Ansprüche 1 oder 2, **dadurch gekennzeichnet, dass** die Sitzverschiebung (d) für die Verwendung in der Tourist Class (TC) sich im Bereich von 100 bis 180 mm bewegt.

4. Anordnung nach einem der Ansprüche 1 bis 3, **dadurch gekennzeichnet, dass** der Schräganordnungswinkel (α) im Bereich von 10° bis 20° vorgesehen ist.

5. Anordnung nach einem der Ansprüche 1 bis 4, **dadurch gekennzeichnet, dass** die Sitzverschiebung (d) entsprechend der Position des Sitzes (3, 3', 3" oder 9, 9', 9") innerhalb der Sitzreihe (6) ein variables Maß ( d₁ oder d₂) aufweist.

6. Anordnung nach Anspruch 1, **dadurch gekennzeichnet, dass** der erste Drehwinkel (β₁) des äußeren Sitzes (9) gleich 0° beträgt, der zweite Drehwinkel (β₂) des angrenzenden mittleren Sitzes (9') größer 0° beträgt und der daran angrenzende gangseitige Sitz (9") einen dritten Drehwinkel (β₃) größer dem Drehwinkel (β₂) des angrenzenden mittleren Sitzes (9') aufweist.

7. Anordnung nach einem der Ansprüche 1 bis 6, **dadurch gekennzeichnet, dass** die Sitze (3, 3', 3") eine in eine Richtung abgeschrägte Rückenlehne (7) aufweisen.

8. Anordnung nach einem der Ansprüche 1 bis 6, **dadurch gekennzeichnet, dass** die Sitze (3, 3', 3") eine symmetrisch abgeschrägte Rückenlehne (8) aufweisen.

9. Anordnung nach einem der Ansprüche 1 bis 8, **dadurch gekennzeichnet, dass** die Sitze (3, 3', 3"; 9, 9', 9") auf einem gemeinsamen Sitzträger (11) montierbar sind, der sich über eine Bodenschiene (14) und eine seitliche Sitzträgerbefestigung (15) abstützt.

10. Anordnung nach einem der vorangegangenen Ansprüche, **dadurch gekennzeichnet, dass** zwischen den Sitzen (3, 3', 3") Armstützen (10A) vorgesehen sind, die sich teleskopartig verlängern bzw. verkürzen und/oder in der Vertikalebene verschwenken lassen.

## Claims

1. Layout of rows of passenger seats in transport means, in particular in cabins (1) of passenger aircraft, whereby several seat rows are disposed one behind the other, which seat rows are provided with the outer seats in the non-accessible cabin window region and access to the seat rows (5) is via an aisle side (4), at least one aisle-side inner seat (9', 9") being provided within a seat row (5), and having a seat offset (d) starting respectively from the outer seat (9 respectively 9') towards the directly adjoining inner seat (9' respectively 9") in the aircraft longitudinal direction or the seat rows (5) are disposed in an oblique arrangement (at an angle α) starting from a line perpendicular to the aircraft longitudinal axis, **characterised in that** each respective seat (9, 9', 9") within the seat row (5) has a position (angle β₁, β₂, β₃) rotated about the seat rotation axis and the individual seat (9, 9', 9") is rotated about the seat rotation axis within a range of from 0° - 8°, and the first rotation angle (β₁) of the outer seat (9) is less than or equal to the second rotation angle (β₂) of the adjoining middle seat (9') and the aisle-side seat (9") adjoining it has a third rotation angle (β₃) greater than or equal to the rotation angle (β₂) of the adjoining middle seat (9').

2. Layout as claimed in claim 1, **characterised in that** the seats are offset (d) starting from an outer seat (3; 9) with respect to a directly adjacent adjoining inner seat (3', 9') in the flight direction.

3. Layout as claimed in one of claims 1 or 2, **characterised in that** the seat offset (d) for use in tourist class (TC) varies in the range of from 100 to 180 mm.

4. Layout as claimed in one claims 1 to 3, **characterised in that** the oblique layout angle (α) is in the range of from 10° to 20°.

5. Layout as claimed in one of claims 1 to 4, **characterised in that** the seat offset (d) is a variable dimension (d₁ or d₂) depending on the position of the seat (3, 3', 3" or 9, 9', 9") within the seat row (6).

6. Layout as claimed in claim 1, **characterised in that** the first rotation angle (β₁) of the outer seat (9) is equal to 0°, the second rotation angle (β₂) of the adjoining middle seat (9') is greater than 0° and the aisle-side seat (9") adjoining it has a third rotation angle (β₃) bigger than the rotation angle (β₂) of the adjoining middle seat (9').

7. Layout as claimed in one of claims 1 to 6, **characterised in that** the seats (3, 3', 3") have a backrest (7) inclined in one direction.

8. Layout as claimed in one of claims 1 to 6, **characterised in that** the seats (3, 3', 3") have a symmetrically inclined backrest (8).

9. Layout as claimed in one of claims 1 to 8, **characterised in that** the seats (3, 3', 3"; 9, 9', 9") can be mounted on a common seat support (11) which is supported by means of a floor rail (14) and a lateral seat support fixing means (15).

10. Layout as claimed in one of the preceding claims, **characterised in that** arm rests (10A) are provided between the seats (3, 3', 3"), which can be telescopically lengthened or shortened and/or which pivot in the vertical plane.

## Revendications

1. Disposition de rangées de sièges de passagers dans des véhicules de transport, en particulier dans les cabines (1) d'avions de transport de passagers, plusieurs rangées de sièges étant disposées les unes derrière les autres, les rangées de sièges étant prévues avec les sièges extérieurs dans la région non accessible des hublots de cabine et l'accès aux rangées de sièges (5) se faisant depuis un couloir (4), au moins un siège intérieur (9', 9"), côté couloir, étant prévu à l'intérieur d'une rangée de sièges (5) et, partant chaque fois du siège extérieur (9 ou 9') en direction du siège intérieur (9' ou 9") directement voisin, une possibilité de décalage de siège (d) étant prévue dans la direction longitudinale de l'avion, et/ou les rangées de sièges (5), partant d'une ligne perpendiculaire à l'axe longitudinal de l'avion, présentant une disposition oblique (sous un angle α), **caractérisée en ce que**, à l'intérieur de la rangée de sièges (5), le siège (9, 9', 9") concerné présente une position tournée autour de l'axe de rotation du siège (angle β₁, β₂, β₃) et la rotation de chaque siège individuel (9, 9', 9") s'effectue dans une plage comprise entre 0° et 8° autour de l'axe de rotation du siège, le premier angle de rotation (β₁) du siège extérieur (9) étant inférieur ou égal au deuxième angle de rotation (β₂) du siège médian (9') voisin, et le siège (9") voisin, situé côté couloir, présentant un troisième angle de rotation (β₃) qui est supérieur ou égal à l'angle de rotation (β₂) du siège médian (9') voisin.

2. Disposition selon la revendication 1, **caractérisée en ce que** le décalage de siège (d), partant d'un siège extérieur (3; 9) par rapport à un siège intérieur (3', 9') directement voisin, s'effectue dans le sens du vol.

3. Disposition selon une des revendications 1 ou 2, **caractérisée en ce que** le décalage de siège (d) destiné à l'utilisation en classe touriste (TC) se situe dans la plage comprise entre 100 et 180 mm.

4. Disposition selon une des revendications 1 à 3, **caractérisée en ce que** l'angle de disposition oblique (α) est prévu dans la plage comprise entre 10° et 20°.

5. Disposition selon une des revendications 1 à 4, **caractérisée en ce que** le décalage de siège (d), en fonction de la position du siège (3, 3', 3" ou 9, 9', 9") dans la rangée de sièges (5), présente une valeur variable (d₁ ou d₂).

6. Disposition selon la revendication 1, **caractérisée en ce que** le premier angle de rotation (β₁) du siège extérieur (9) est égal à 0°, le deuxième angle de rotation (β₂) du siège médian (9') voisin est supérieur à 0° et le troisième angle de rotation (β₃) du siège (9") voisin, situé côté couloir, est supérieur à l'angle de rotation (β₂) du siège médian (9') voisin.

7. Disposition selon une des revendications 1 à 6, **caractérisée en ce que** les sièges (3, 3', 3") présentent un dossier (7) qui a une forme oblique dans une direction.

8. Disposition selon une des revendications 1 à 6, **caractérisée en ce que** les sièges (3, 3', 3") présentent un dossier (8) qui a une forme oblique symétrique.

9. Disposition selon une des revendications 1 à 8, **caractérisée en ce que** les sièges (3, 3', 3"; 9, 9', 9") peuvent être montés sur un support de sièges (11) commun qui est en appui sur un rail au sol (14) et un moyen de fixation (15) latéral de support de siège.

10. Disposition selon une des revendications précédentes, **caractérisée en ce qu'**il est prévu entre les sièges (3, 3', 3") des accoudoirs (10A) qui peuvent être prolongés ou raccourcis de façon télescopique et/ou être pivotés dans le plan vertical.
